# EUROPEAN PATENT APPLICATION

(11) **EP 4 721 844 A1**
(43) Date of publication of application: **08.04.2026**
(21) Application number: 24204342.0
(22) Date of filing: 02.10.2024
(51) Int. Cl.: B01D 53/94, B01J 23/42, B01J 23/44, B01J 35/00, B01J 35/57, F01N 3/10

(54) **AN OXIDATION CATALYST ARTICLE FOR USE UPSTREAM IN AN EXHAUST GAS TREATMENT SYSTEM**

(71) Applicant: Johnson Matthey Public Limited Company, London EC2V 7AD (GB)
(72) Inventor: CHIFFEY, Andrew Francis, Royston, SG8 5HE (GB); COOPER, Oliver James, Royston, SG8 5HE (GB); GHOLAMI, Rahman, Royston, SG8 5HE (GB); MOREAU, Francois Pierre Henri, Royston, SG8 5HE (GB); PINTO, Jose Jorge Baeta Fontinha, Royston, SG8 5HE (GB)
(74) Representative: Johnson Matthey Public Limited Company

(57) **Abstract**

An oxidation catalyst article (20) for treating an exhaust gas produced by a compression ignition engine comprises a flow-through honeycomb substrate (5) having an inlet end and an outlet end and a longitudinal length (10) extending therebetween and comprising an array of channels each defined by a channel wall; a first washcoat (35) extending a first length from the inlet end which is up to 40% of the longitudinal length of the substrate and comprising a first platinum group metal composition on a first alumina support, the first washcoat (35) having a total combined loading of Pt and Pd of X g/ft³; a second washcoat (25) extending a second length from the inlet end which is up to 85% of the longitudinal length of the substrate and entirely overlying the first washcoat (35), the second washcoat (25) comprising a second platinum group metal composition on a second alumina support, the second washcoat (25) having a total combined loading of Pt and Pd of Y g/ft³; a third washcoat (30) extending a third length from the outlet end and comprising a third platinum group metal composition on a third alumina support, the third washcoat having a total combined loading of Pt and Pd of Z g/ft³, wherein the third platinum group metal composition is platinum only or both platinum and palladium; and a fourth washcoat (40) extending a fourth length from the outlet end which is 40% or less of the longitudinal length of the substrate, overlying the third washcoat (30) and comprising a capture material, wherein the capture material comprises a Pt-alloying metal supported on a refractory oxide; wherein 2Z<X>1.5Y; wherein a sum of the first length and the third length is less than 120% of the longitudinal length (10); and wherein a sum of the second length and the fourth length is from 100% to 120% of the longitudinal length (10).

## Description

The present invention relates to an oxidation catalyst article for treating an exhaust gas produced by a compression ignition engine, especially a Diesel Oxidation Catalyst (DOC) article, with improved resistance to phosphorus poisoning. The oxidation catalyst article simultaneously exhibits reduced platinum volatility which renders the article particularly suitable for use in an exhaust gas treatment system upstream of other catalytic components that may be included in the system. The present invention further relates to an exhaust gas treatment system comprising the oxidation catalyst article, an apparatus comprising a compression ignition engine and the exhaust gas treatment system, and a method of treating the exhaust gas produced by a compression ignition engine.

Combustion engines produce exhaust gases that contain pollutants, such as carbon monoxide (CO), unburned hydrocarbons (HCs), oxides of nitrogen (NOx) and particulate matter (PM). Emissions standards for pollutants in an exhaust gas produced by a combustion engine, particularly for vehicular engines, are becoming increasingly stringent. There is a need to provide improved catalysts and exhaust systems for treating and removing the pollutants in such exhaust gases that can meet these standards and which are cost-effective. It is particularly desirable that these catalysts show consistent performance over their lifetime.

The exhaust gas from gasoline and diesel engines is commonly treated with a catalyst that can oxidise (i) carbon monoxide (CO) to carbon dioxide (CO₂); and (ii) hydrocarbons (HCs) to water (H₂O) and carbon dioxide (CO₂). The exhaust gas from a compression ignition engine, such as a diesel engine, is typically treated with an oxidation catalyst (commonly called a diesel oxidation catalyst (DOC)) that performs oxidation reactions (i) and (ii).

Oxidation catalysts for compression ignition internal combustion engines typically contain one or more platinum group metals. The specific platinum group metal(s) selected for inclusion in an oxidation catalyst will depend on a variety of factors, such as reactivity toward specific pollutants and under differing exhaust gas conditions, cost, durability at high temperatures, chemical compatibility with the support material and any other components of the catalyst, and susceptibility to poisoning by impurities. For example, platinum group metals (PGMs) such as platinum (Pt) and palladium (Pd) are each able to oxidise carbon monoxide (CO) and hydrocarbons (HCs) in an exhaust gas from a compression ignition engine. Palladium is more susceptible to poisoning by sulfur in fuel compared to platinum but has greater thermal durability.

Strategies for meeting current emissions standards for heavy-duty diesel engines typically adopt an exhaust system architecture comprising a series of catalysed substrates and injectors. In order, from upstream to downstream (upstream being relative to an engine connected or connectable to the exhaust system), a typical exhaust system comprises a hydrocarbon fuel injector, a diesel oxidation catalyst (DOC), a catalysed soot filter (CSF, i.e. a catalysed diesel particulate filter (DPF)), a urea (ammonia precursor) injector, one or more selective catalytic reduction (SCR) catalyst and an ammonia slip (ASC) catalyst, also known as an ammonia oxidation (AMOx) catalyst (see e.g. WO2011140251A2). The hydrocarbon fuel injector can be a fuel injector for an engine cylinder - in which case additional hydrocarbon fuel is injected into the cylinder over and above that which is required to power the engine piston stroke - and/or an injector for injecting hydrocarbon fuel directly into an exhaust gas downstream from the engine.

As well as performing the above reactions (i) and (ii), some diesel oxidation catalysts are also able to oxidise nitrogen monoxide (NO) to nitrogen dioxide (NO₂), which can aid removal of NOx using an additional, downstream emissions control device. During normal operation the aim of a DOC is to control CO and HC emissions in engine exhaust gas and to promote the conversion of NO to NO₂ in the gas for downstream passive filter regeneration (the combustion of particulate matter held on a filter in NO₂ at lower exhaust gas temperatures than in O₂ in the exhaust gas, i.e. the so-called CRT@ effect) or optimisation of the SCR reaction.

SCR catalysts are designed to catalyse the reduction of NOx selectively using a nitrogenous reductant, typically this may be derived from an ammonia precursor such as urea, which reductant is injected into a flowing exhaust gas upstream from the SCR catalyst in an amount to promote the principal NOx reduction reactions of:

(1) 4NH₃ + 4NO + O₂ → 4N₂ + 6H₂O;

(2) 4NH₃ + 2NO₂ + O₂ → 3N₂ + 6H₂O;

and

(3) NO + NO₂ + 2NH₃ → 2N₂ + 3/2H₂O

(the preferred, so-called "fast SCR reaction").

It will be understood that each of reactions (1)-(3) can occur in parallel, but the kinetically fastest reaction will be favoured. Therefore, in an exhaust gas containing a NO₂:NOx ratio of 0.5, the kinetically favoured fast SCR reaction dominates. Most of the NOx emitted from a diesel engine is in the form of NO. Accordingly, it is desirable for the upstream DOC to promote NO oxidation for NO₂ production.

Diesel particulate matter filter systems for vehicles involve the interaction of filter materials with regeneration techniques. "Regeneration" is the selected method of combusting diesel particulate matter held on a filter. If particulate matter builds up on a filter, it increases the backpressure in the system, causing the engine to "work" harder against the back pressure, thereby decreasing fuel economy. Increased backpressure in the system can also increase engine component wear. Regeneration techniques can be broadly divided into the categories of passive, active and combinations of both passive and active. In passive systems, particulate matter combustion is assisted without active intervention. For example, the oxidation temperature of the particulate matter can be lowered to a level where the filter can be auto-regenerated during regular vehicle operation. Examples include catalysing the filter medium; addition of a catalyst fuel additive so that the particulate matter on the filter includes in its composition catalyst for promoting soot combustion; and generating nitrogen dioxide (NO₂) upstream of the filter for combusting the particulate matter held on the filter: particulate matter combusts in NO₂ at lower temperatures than in oxygen. This is the so-called CRT@ effect (see e.g. EP0341832A2).

Active regeneration is conducted infrequently, but the period between regeneration events is dependent on several factors including engine design, filtration efficiency during normal operation, engine load during normal operation etc.

In passive-active systems, the "passive" filter catalyst and/or upstream (CRT^{®} effect-promoting) NO oxidation catalyst etc. can be utilised to assist passive regeneration when driving conditions prevent passive regeneration of a filter, e.g. during periods of slow driving when the exhaust gas temperature can be insufficient to promote adequate passive regeneration. Active regeneration can be done by injecting hydrocarbon fuel upstream of the (CRT^{®} effect-promoting) NO oxidation catalyst and combusting the fuel on the NO oxidation catalyst, thereby creating a localised increase in the temperature of the exhaust gas at the oxidation catalyst, which heated exhaust gas then flows downstream to regenerate the filter. Using fuel to actively heat a filter comes at a cost of reduced vehicle fuel economy. However, the periods of passive and active regeneration can interact to reduce the frequency and duration of active regenerations, thereby reducing the overall impact of regeneration on fuel economy. It is an advantage to be able to perform active regenerations starting at as low exhaust gas temperatures as possible, as the ability to trigger a lower exhaust gas temperature reduces particulate matter build-up - and consequent backpressure - in the exhaust system and/or the necessity to actively heat the filter up to a temperature when regeneration can be done; triggering an active regeneration at too low a temperature risks extinguishing an exotherm on the DOC and subsequent emission of additionally injected hydrocarbon fuel to atmosphere. That is, a failed active regeneration increases atmospheric hydrocarbon pollution without regenerating the filter.

A "pure" active regeneration system (i.e. no passive regeneration assistance) may include a (full or partial flow) fuel burner or electric heating (upstream or embedded in the filter). Where an oxidation catalyst (whether for passive or passive-active system) is used for treating exhaust gas from a diesel engine, the oxidation catalyst is often referred to as a diesel oxidation catalyst (DOC).

Modern DOCs, particularly for Heavy-Duty Diesel application, are typically configured to act as an exotherm generation catalyst during active DPF/CSF regeneration, promoted by injection of hydrocarbon fuel into exhaust gas upstream of the DOC. For the avoidance of doubt, the fuel injection/exotherm generation event does not take place during normal operation: normal operation is considered to be the period between fuel injection/exotherm generation events (see C. Ruehl et al. Environ. Sci. Technol. 2018, 52, 10, 5868-5874). The DPF/CSF controls particulate matter (PM) emissions and the DOC and CSF can promote the overall conversion of NO to NO₂ exiting the CSF to enhance the SCR reaction performance on a downstream SCR catalyst.

In order to generate these exotherms on the DOC, an amount of hydrocarbon (HC) is injected upstream of the DOC (e.g. ~2000 ppm). As explained above, HC injection can be done via engine cylinder fuel injector or using an injector for injecting hydrocarbon fuel directly into an exhaust gas downstream from the engine. Additional injection of hydrocarbon fuel in-cylinder intended for emission as part of exhaust gas for the purpose of creating an exotherm on a downstream DOC are generally electronically controlled by an Engine Control Unit, including a central processing unit(s) preprogrammed, when in use, variably to control fuel injection timing, in combination with fuel injection systems, such as common rail. These arrangements allow for the application of such processes as multiple injections during one engine cycle. As the name suggests, multiple fuel injections replace a single injection event with multiple discrete injection events.

Injection events that occur after the main injection, i.e. the injection of fuel intended primarily for powering the engine piston stroke, often referred to as post-injections or after-injections, can be used to control PM emissions and/or to manage exhaust aftertreatment systems: post-injections occur very shortly after the main injection event while the process of combusting the main fuel injection is still underway and are intended to burn in-cylinder to generate an exotherm to heat exhaust gas before it leaves the cylinder; and after-injections occur much later after the combustion process is complete and are not intended to burn in-cylinder. "Post-injection" generally contains less than 20% of the total fuel injected in an engine cycle.

Provided that the DOC is hot enough, the additional HC in exhaust gas will lead to the production of an exotherm on the DOC, heating the exhaust gases and, consequently, heating those components downstream of the DOC (up to temperatures of around 500°C). If the DOC is not hot enough then it may be necessary through engine management to provide a hotter exhaust gas from the engine, e.g. by post injection in-cylinder, to heat up the DOC sufficiently to allow an active regeneration to occur, all with an associated energy and performance impact.

Accordingly, it is desirable to provide a DOC with the ability to generate an exotherm from as low an initial temperature as possible. The lower this temperature, the more likely the engine is to already be working above the exotherm temperature when an exotherm is required and/or the smaller the amount of active heating energy is needed to reach the regeneration temperature.

There are believed to be two basic mechanisms where catalysts for treating exhaust gas from internal combustion engines can become poisoned: (i) selective poisoning, in which a contaminant reacts directly with an active site or catalyst support causing a reduction in activity or a catastrophic loss in activity; and (ii) non-selective poisoning, which causes a loss of performance by sterically hindering access to active sites or pores in a catalyst support by fouling (or masking) a surface of the support or active sites. The inventors have found that phosphorus (as phosphoric acid droplets) is a non-selective poison of the exotherm generation function of the oxidation catalysts of active or active-passive systems. Formation of glassy zinc phosphate deposits on a washcoat surface can also non-selectively deactivate a catalyst by creating a diffusion barrier, preventing exhaust gas molecules reaching active sites.

Poisons which chemically react with catalyst components such as, at higher temperature, phosphorus, can also poison the exotherm generation function of the oxidation catalyst. A major source of phosphorus in exhaust gas is likely to be from the additives zinc dialkyl dithio phosphate (ZDDP), used in mineral-based oils, or in synthetic oil. These additives are used to protect the moving parts of the engine, such as the camshaft, from wear through use. Heavy-Duty vehicle engine oils have higher concentrations of additives than lubricants for use in light-duty vehicle engines, such as those used in passenger cars, so the problem of zinc and phosphorus deactivation is particularly problematic for Heavy-Duty vehicle engines. Phosphorus deposits cannot be removed from the catalyst, except under conditions which are likely to cause thermal deactivation of the oxidation catalyst and other catalyst components in the exhaust system (that is, very high operating temperatures).

The present invention builds upon the systems disclosed in Applicant's WO2020260669A1 and WO2021074605A1. These disclose composite, zoned oxidation catalysts for use in an exhaust system for treating an exhaust gas produced by a vehicular compression ignition internal combustion engine, preferably for a heavy-duty diesel vehicle. These in turn built upon WO2013088152A1 with the goal of reducing the quantity of total platinum group metal present in the diesel oxidation catalyst in general. These documents aim to provide a composite oxidation catalyst, i.e. a multifunction catalyst arrangement on a single substrate, which can achieve stable NO₂ generation for operation of downstream catalyst functions, including the CRT@ effect for combustion of particulate matter on a downstream filter and/or promotion of a so-called fast reaction on a selective catalytic reduction (SCR) catalyst. An optional feature of the composite, zoned oxidation catalysts disclosed in Applicant's WO2020260669A1 and WO2021074605A1 is a guard bed washcoat overlayer for protecting at least part of the underlying first catalyst washcoat zone from phosphorus and/or zinc poisoning at an inlet end thereof.

However, the inventors have found that the systems disclosed in Applicant's WO2020260669A1 and WO2021074605A1 are more resource intensive to manufacture, in that the guard bed washcoat overlayer is coated in a separate, additional washcoating step. The design including the guard bed can also undesirably increase backpressure in the system and reduce mass transfer of exhaust gas to the underlying highly active exotherm-generating first catalyst washcoat zone.

Additionally, the inventors have found that when the upstream oxidation catalyst article is exposed to relatively high temperatures for a sufficient period of time, low levels of platinum (Pt) may volatilise from the catalytic material and can become trapped on the SCR catalyst. Such relatively high temperatures may occur during normal use, especially in heavy duty diesel applications, or during filter regeneration, such as when the first emissions control device is a CSF or when there is an upstream diesel particulate filter (DPF). Pt trapped on the SCR catalyst can have a highly detrimental effect on the catalyst's performance because it can oxidise ammonia (NH₃). The trapped Pt can consume the NH₃ that is intended for the selective catalytic reduction of NOx (thereby decreasing NOx conversion) and undesirable, secondary emissions may be produced.

WO2013/050784A2 relates to a catalysed substrate monolith comprising a first washcoat coating and a second washcoat coating, wherein the second washcoat coating is disposed in a layer above the first washcoat coating.

EP3888774A1 relates to a composite, zone-coated, oxidation and exotherm generation catalyst for use in an exhaust system for treating an exhaust gas produced by a vehicular compression ignition internal combustion engine, particularly for a heavy-duty diesel vehicle, which exhaust gas can include relatively high concentrations of carbon monoxide.

WO2023041407A1 relates to a catalytic article comprising zoned three-way conversion (TWC) catalysts, the catalytic article comprising a substrate; a bottom washcoat deposited on the substrate; and a top washcoat deposited on the bottom washcoat, wherein the bottom washcoat comprises a zoned configuration, wherein the zoned configuration comprises a first zone and a second zone, wherein the first zone comprises palladium supported on ceria-zirconia mixed oxide or alumina or both, wherein the second zone comprises platinum supported on a ceria-alumina composite, wherein the top washcoat comprises rhodium supported on an alumina or a ceria-alumina composite.

US20150165423A1 relates to layered catalyst compositions comprising three components, and their use for reducing carbon monoxide and hydrocarbon emissions, for oxidizing nitrogen monoxide to nitrogen dioxide, and for enhancing downstream SCR performance in diesel engine systems.

CN109985624A relates to a three-coated motorcycle catalyst coated with a first precious metal coating of 10 to 150 g/L at the air inlet end of the honeycomb carrier, a second precious metal coating of 10 to 120 g/L at the air outlet end of the honeycomb carrier, and a third precious metal coating of 5 to 80 g/L is coated on the outer surface of the second precious metal coating.

WO2021198680A1 relates to a layered diesel oxidation catalyst for treatment of exhaust gas emissions from a diesel engine comprising: a flow-through monolith substrate having a honeycomb structure and comprising a front zone and a rear zone, wherein the front zone of the substrate comprises a combination of layers, one on top of another and comprising two or more of layers A, B and C; and the rear zone comprises Layer D.

WO2018/029448A1 relates to an oxidation catalyst and an exhaust system for treating an exhaust gas produced by a compression ignition engine, and further relates to methods and uses of the oxidation catalyst, the exhaust system and the region for capturing volatilised platinum.

Accordingly, it is an object of the present invention to provide an oxidation catalyst with improved resistance to catalyst poisoning, particularly phosphorus and/or zinc poisoning, and consequent improved aged performance after exposure to such catalyst poisoning. It is also an object of the present invention for such an oxidation catalyst to be resistant to platinum volatilisation so as to be more effective in combination with downstream components of an exhaust system, and to provide an exhaust system comprising such components. Preferably the oxidation catalyst also has reduced backpressure when in use. At the very least, the present invention aims to tackle problems associated therewith in the prior art or provide a commercially viable alternative thereto.

Thus, a first aspect of the present invention provides an oxidation catalyst article for treating an exhaust gas produced by a compression ignition engine comprising:
a flow-through honeycomb substrate having an inlet end and an outlet end and a longitudinal length extending therebetween and comprising an array of channels each defined by a channel wall;
a first washcoat extending a first length from the inlet end which is up to 40% of the longitudinal length of the substrate and comprising a first platinum group metal composition on a first alumina support, the first washcoat having a total combined loading of Pt and Pd of X g/ft³;
a second washcoat extending a second length from the inlet end which is up to 85% of the longitudinal length of the substrate and entirely overlying the first washcoat, the second washcoat comprising a second platinum group metal composition on a second alumina support, the second washcoat having a total combined loading of Pt and Pd of Y g/ft³;
a third washcoat extending a third length from the outlet end and comprising a third platinum group metal composition on a third alumina support, the third washcoat having a total combined loading of Pt and Pd of Z g/ft³, wherein the third platinum group metal composition is platinum only or both platinum and palladium; and
a fourth washcoat extending a fourth length from the outlet end which is 40% or less of the longitudinal length of the substrate, overlying the third washcoat and comprising a capture material, wherein the capture material comprises a Pt-alloying metal supported on a refractory oxide;
wherein 2Z<X>1.5Y;
wherein a sum of the first length and the third length is less than 120% of the longitudinal length; and
wherein a sum of the second length and the fourth length is from 100% to 120% of the longitudinal length.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The present invention builds on existing DOC designs, such as Applicant's WO2020260669A1 and WO2021074605A1, which have a highly loaded front zone of PGMs as discussed above. In the existing DOC designs, the high loading is obtained by impregnating the inlet end of an existing washcoat layer with additional PGMs such as Pt and Pd. This gives a high loading of PGMs at the inlet end which is effective for exotherm generation when contacted by additional hydrocarbon fuel. The impregnation composition used does not contain a refractory metal oxide support like a conventional washcoat.

As was shown in Example 5 and 6 of WO2020260669A1 and Examples 9 and 10 of WO2021074605A1, the existing DOC design without a guard bed was found to be more prone to catalyst poisoning from phosphorus and/or zinc. This is because the highly active Pt and Pd is the first part of the catalyst to encounter the phosphorous in the exhaust gases and this means that the phosphorous and/or zinc can directly impede the active sites of the Pt and Pd metals, whether by selective or non-selective poisoning.

The same Examples show that when an inert washcoat guard bed layer was coated across the highly loaded front zone of PGMs, alternatively a washcoat layer including a low loading of PGMs, there was some improvement in catalyst poison-resistance, but a consequent reduction in aged exotherm performance.

The inventors have now found that they can substitute the high loading of Pt and/or Pd applied by surface impregnation disclosed in Applicant's WO2020260669A1 and WO2021074605A1 for an underlying washcoat layer. The underlying washcoat layer extends from the inlet end for a portion only of a total axial length of a flow-through monolith substrate and has a high loading of PGMs and an overlying washcoat layer extends beyond a downstream end of the underlying washcoat layer. However, because the highly loaded underlying washcoat layer is disposed under another washcoat it is shielded from catalyst poisoning. Moreover, the additional washcoat thereon acts as a barrier to inhibit the volatilisation of platinum which is additionally beneficial for maintaining catalytic performance of the oxidation catalyst article which is especially useful when combined with downstream catalysts, such as an SCR catalysts for NOx conversion as described herein.

The inventors have further discovered that adjusting the porosity of the overlying washcoat layer maintains the catalyst poisoning resistance with a reduced effect on the exotherm generation performance.

The present invention relates to an oxidation catalyst article, preferably a diesel oxidation catalyst (DOC) article. By a catalyst article it is meant a single component for an exhaust gas treatment system. These are also sometimes referred to as "bricks".

The article comprises a flow-through substrate having an inlet end and an outlet end and a longitudinal (axial) length extending therebetween. The flow-through monolith substrate has a plurality of channels extending between the inlet end and the outlet end. The plurality of channels extends in the longitudinal direction and provide a plurality of inner surfaces (e.g. the surfaces of the walls defining each channel). Each of the channels has an opening at the inlet end and an opening at the outlet end.

For the avoidance of doubt, the flow-through monolith substrate is not a wall flow filter.

The channels may be of a constant width and each plurality of channels may have a uniform channel width. Preferably within a plane orthogonal to the longitudinal direction, the monolith substrate has from 300 to 900 channels per square inch, preferably from 400 to 800, such as from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of monolith substrates are well known in the art.

It should be noted that the flow-through monolith substrate described herein is a single component (i.e. a single brick), nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present invention comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo-aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

The article as described herein is provided with a number of washcoats and may therefore be best considered a zoned oxidation catalyst article. Each washcoat forms a distinct zone on the substrate and the zones may overlap as explained below. Washcoat compositions and their application is well known in the art.

There is provided a first washcoat which is provided extending from the inlet end of the substrate. The first washcoat extends a first length which is up to 40% of the longitudinal length of the substrate, such as from 20 to 40% of the longitudinal length of the substrate. Preferably the first washcoat extends at least 15% of the longitudinal length of the substrate. The first washcoat can extend from the inlet end for 25 to 35% of the longitudinal length of the substrate. Preferably, the first washcoat extends 20 to 30% of the longitudinal length of the substrate.

There is provided a second washcoat extending from the inlet end. The second washcoat entirely overlies the first washcoat. That is, the second washcoat forms a protective covering across the entirety of the first washcoat. In addition, the second washcoat desirably extends further along the length of the substrate as discussed below. That is, both the first and second washcoats start at the inlet end of the substrate and the second washcoat is longer than the first washcoat. The second washcoat contributes passive CO and HC oxidation.

The second washcoat extends a second length which is up to 85% of the longitudinal length of the substrate, and preferably the second washcoat extends at least 60% of the longitudinal length of the substrate. Preferably the second washcoat extends from 60 to 75% of the longitudinal length of the substrate.

There is provided a third washcoat extending a third length from the outlet end. The third washcoat which forms a rear zone is intended to handle the competing NOx oxidation that desirably also needs to occur. The third washcoat typically has a lower PGM content and is more resistant to sintering due to the lower PGM content. That is, when the rear zone has a lower loading of PGMs, the particles of PGMs are more spaced out and less likely to sinter (or agglomerate) together. Using lower amounts of PGMs in the rear zone is a more efficient use of the PGMs.

In some embodiments the third washcoat does not overlap the first washcoat, or *vice versa.* That is, if the first washcoat is 35% of the longitudinal length from the inlet, then the third washcoat is 65% or less of the longitudinal length from the outlet, i.e. the sum of the first and third length are 100% of the longitudinal length of the substrate or less, and in some preferred embodiments abut another such that the sum of their lengths is about 100%. However, some overlap of the layers (on the order of up to about 20% of the longitudinal length, e.g. from 5% to 20%) may be included in order to ensure complete coverage of the channels walls since it is not preferred for there to be uncoated substrate, and the sum of the first length and the third length is less than 120% of the longitudinal length (and may therefore be from about 100% to 120%). Preferably the third washcoat extends at least 25% of the longitudinal length of the substrate, and preferably up to 90% of the length. Preferably the third washcoat extends from 80 to 50% of the longitudinal length of the substrate.

In some embodiments as described above, the second washcoat can extend a greater length that the first washcoat. As such, in some preferred embodiments, the second washcoat extends directly onto the substrate such that the third washcoat preferably overlaps on top of the second washcoat. As will be appreciated, smaller lengths of the third washcoat may be used where the sum of the second and third lengths are at least about 100% of the longitudinal length of the substrate since this also ensures that there is no uncoated substrate.

The fourth washcoat extends a fourth length from the outlet end which is 40% or less of the longitudinal length of the substrate. The fourth washcoat is also provided overlying the third washcoat. Where the fourth washcoat is typically shorter than the third washcoat, the fourth is generally provided entirely on the third. The fourth washcoat is provided within the rear half of the catalyst article and is therefore arranged to contact the exhaust gas after the exhaust gas has contacted and/or passed through the catalytic material in the upstream washcoats. Equivalent to the preferred sum of the first and third lengths, the sum of the second and fourth lengths is from 100% to 120% of the longitudinal length of the substrate thereby ensuring that there is no uncoated substrate, and/or that neither of the first and third washcoats are uncoated.

The first washcoat comprises a first platinum group metal composition on a first alumina support. The second washcoat comprises a second platinum group metal composition on a second alumina support. The third washcoat comprises a third platinum group metal composition on a third alumina support. Where any of these washcoats contain more than one different PGM, these may be provided on the same or different support particles. For example, a Pt and Pd-containing washcoat may be formed from a support provided with Pt and Pd, or a mix of washcoats, one having Pt and one having Pd. It is generally preferred that platinum is present in each of the first, second and third washcoats as described herein.

The support material in each washcoat comprises alumina which is a refractory metal oxide support material. The support material may further comprise silica, zirconia or ceria, or be provided as a composite oxide or a mixed oxide of alumina therewith. Mixed oxides or composite oxides include silica-alumina. Preferably, the refractory metal oxide support material does not comprise ceria or a mixed oxide or composite oxide including ceria. More preferably, the refractory oxide is selected from the group consisting of alumina and silica-alumina.

The inclusion of a dopant may stabilise the alumina or promote catalytic reaction of the supported platinum group metal. Typically, the dopant may be selected from the group consisting of zirconium (Zr), titanium (Ti), silicon (Si), yttrium (Y), lanthanum (La), praseodymium (Pr), samarium (Sm), neodymium (Nd), barium (Ba) and an oxide thereof. In general, the dopant is different to the refractory metal oxide (i.e. the cation of the refractory metal oxide).

When the refractory metal oxide support material is doped with a dopant, then typically the refractory metal oxide support material comprises a total amount of dopant of 0.1 to 10 % by weight. It is preferred that the total amount of dopant is 0.25 to 7 % by weight, more preferably 2.5 to 6.0 % by weight. Preferably the dopant is silica, because oxidation catalysts comprising such support materials in combination with platinum group metals and alkaline earth metals promote oxidation reactions, such as CO and hydrocarbon oxidation.

The first washcoat may comprise Pt, Pd or a combination thereof. The first washcoat preferably comprises a combination of Pt and Pd. The second washcoat may comprise Pt or a combination of Pt and Pd. The second washcoat preferably comprises a combination of Pt and Pd. The third washcoat may comprise Pt or a combination of Pt and Pd. The third washcoat preferably comprises a combination of Pt and Pd. The fourth washcoat preferably does not comprise Pt.

Accordingly, in a preferred embodiment, the first comprises a combination of Pt and Pd, the second comprises Pt or a combination of Pt and Pd, and the third comprises Pt or a Pt-rich combination of Pt and Pd.

The first washcoat has a total Pt and Pd loading of "X g/ft³". That is, the sum of any Pt which is present and the sum of any Pd which is present add together to give a value of X g/ft³. Preferably the first platinum group metal composition comprises Pt and Pd and preferably consists thereof.

The second washcoat has a total Pt and Pd loading of "Y g/ft³". That is, the sum of any Pt which is present and the sum of any Pd which is present add together to give a value of Y g/ft³. Preferably the second platinum group metal composition comprises Pt and Pd and preferably consists thereof.

The third washcoat has a total Pt and Pd loading of "Z g/ft³". That is, the sum of the Pt which is present and the sum of any Pd which is present add together to give a value of Z g/ft³. The third platinum group metal composition at least comprises Pt and preferably consists thereof.

In the oxidation catalyst article described herein, the total platinum group metal loadings in the first, second and third washcoats satisfy the requirements that the value of X is more than 1.5 times the value of Y and that the value of X is more than twice the value of Z. This can be expressed as 2Z<X>1.5Y. The total platinum group metal loadings in the first, second and third washcoats can satisfy the requirements that the value of X is more than twice the value of Y and that the value of X is more than twice the value of Z. This can be expressed as 2Z<X>2Y. Preferably 4Z<X>4Y. Preferably 10Y>X>4Y and/or preferably 20Z>X>4Z. These inequalities serve to demonstrate how the underlying first washcoat has a significantly higher PGM content than the other layers of the catalyst article.

Preferably Y≥Z and preferably Y>Z. This means that there is a lower concentration of PGMs in a rear zone which may be hotter after the exotherm generation, such that the PGMs are less likely to sinter. In some preferred embodiments Y>1.5Z, more preferably Y>2Z. The lower concentration in this rear zone may be optimal for NO₂ generation.

Preferably the first washcoat extends from the inlet end from 20 to 35% of the longitudinal length of the substrate. If the coating is too short then the exotherm benefits are not observed. Equally, if the coating is too long then an undue amount of PGMs are being used in the article and this is not cost-effective.

Preferably the substrate has a length of about 3 or about 4 inches and the first washcoat extends about 1 inch along the substrate. This represents the typical catalyst article size and dimensions suitable for current design constraints.

Preferably X is from 20 to 60 g/ft³. This represents a high loading of PGMs in the first washcoat. Preferably the first platinum group metal composition comprises Pt and Pd in a first weight ratio (Pt:Pd) of from 1:1 to 6:1, more preferably 3:1 to 5:1. In the prior art highly loaded front zone DOCs it can be preferred to have relatively high levels of Pd to ensure that the exotherm performance is maintained.

Preferably Y is from 5 to 20 g/ft³. This represents a conventional loading of PGMs for an inlet zone washcoat in a DOC. Preferably the second platinum group metal composition comprises Pt only (i.e. this will be understood as a ratio of 1:0 Pt:Pd), or preferably comprises Pt and Pd in a second weight ratio of from 1:2 to 6:1 and preferably about 2:1, including 1:1 to 3:1.

Preferably Z is from 1 to 20 g/ft³. This represents a conventional loading of PGMs for an outlet zone washcoat in a DOC. Preferably the third platinum group metal composition comprises Pt and, optionally, Pd. When Pd is present, the third platinum group metal composition preferably comprises Pt and Pd in a third weight ratio of greater than 5:1 and up to 1:0 (i.e. Pt only). The higher ratio of Pt is optimised for the NO₂ production and there is less need for Pd as this zone is not responsible for exotherm generation. However, the presence of Pd in addition to barium in the third washcoat has been found to improve exotherm quench temperature. In other embodiments, Pt may be promoted with manganese (Mn) for NO₂ production to improve NOx reduction processes on a downstream SCR catalyst and/or soot combustion in NO₂ held on a downstream filter.

Thus, in some preferred embodiments, the first platinum group metal composition has a Pt:Pd ratio of from 3:1 to 6:1, the second platinum group metal composition has a Pt:Pd ratio of from 1:1 to 3:1, and the third platinum group metal composition is platinum only.

The fourth washcoat comprises a capture material, wherein the capture material comprises a Pt-alloying metal supported on a refractory oxide. It is particularly preferred for the capture material for trapping volatilised Pt to not affect (i.e. decrease) the amount of NO₂ (e.g. the ratio of NO₂:NO) in an exhaust gas passing over the fourth washcoat. The capture material will substantially not reduce the amount of any NO₂ produced from the oxidation of NO by Pt in the catalytic material of the oxidation catalyst. Exhaust gas that has passed through both the catalytic material of the oxidation catalyst and the capture material will consequently contain a higher ratio of NO₂:NO compared to the exhaust gas that was initially produced by the compression ignition engine, so that optimal performance of a downstream SCR catalyst and/or soot combustion on a filter in NO₂ (the so-called CRT@ effect) can be obtained. The addition of the fourth washcoat acts as a platinum capture stripe (PCS) is particularly beneficial when combined with the other washcoats described herein in view of the generally high platinum loading in the front zone washcoats (i.e. the first (and second) washcoats). Generally, it is preferable that the capture material (i.e. when new or unused) is substantially free of platinum. It may also be preferable that the capture material does not, in general, comprise a base metal, such as barium or vanadium.

Typically, the capture material comprises a loading of the refractory oxide of 0.1 to 3.5 g/in³, preferably 0.2 to 2.5 g/in³, still more preferably 0.3 to 2.0 g/in³, and even more preferably 0.5 to 1.75 g/in³ (e.g. 0.75 to 1.5 g/in³). The capture material comprises particles of a refractory oxide typically having a mean specific surface area ≥50 m²/g, preferably ≥75 m²/g, more preferably ≥90 m²/g, even more preferably ≥100 m²/g. The mean specific surface area (SSA) of the particles of the refractory oxide can be determined by nitrogen physisorption at -196°C using the volumetric method. The mean SSA is determined using the BET adsorption isotherm equation.

The refractory oxide may have a d90 of <100 micron. The refractory oxide may preferably have a d90 of <75 micron, such as <50 micron, and more preferably <20 micron. When the refractory oxide has a smaller d90, better packing and adhesion can be obtained. For the avoidance of doubt, the d90 measurements may be obtained by Laser Diffraction Particle Size Analysis using a Malvern Mastersizer 2000, which is a volume-based technique (i.e. D90 may also be referred to as Dv90 (or D(v,0.90)) and applying a mathematical Mie theory model to determine a particle size distribution.

Typically, the refractory oxide has a d90 of >0.1 micron. It is preferred that the refractory oxide has a d90 of >1.0 micron, such as >5.0 micron.

The refractory oxide may comprise an oxide of zirconium (e.g. ZrOz), an oxide of neodymium (e.g. Nd₂O₃), an oxide of lanthanum (e.g. La₂O₃), an oxide of hafnium (e.g. HfOz), an oxide of yttrium (e.g. Y₂O₃), an oxide of praseodymium (e.g. PrzOs, PrO₂, and/or PreOn) and/or an oxide of aluminium (e.g. Al₂O₃). It is preferred that the refractory oxide comprises less than 20% by weight of ceria (CeOz), more preferably less than 15% by weight of ceria, and even more preferably less than 10% by weight of ceria. Typically, the refractory oxide is substantially free of ceria. More preferably, the refractory oxide does not comprise ceria. Preferably, the refractory oxide consists of undoped alumina.

Typically, the Pt-alloying metal comprises, or consists essentially of, a metal and/or an oxide thereof. The metal is preferably selected from the group consisting of palladium (Pd); gold (Au); copper (Cu); a mixture of Pd and Au; a mixture of Pd and Cu; a mixture of Au and Cu; a mixture of Pd, Au and Cu; a bimetallic alloy of Pd and Au; a bimetallic alloy of Pd and Cu; a bimetallic alloy of Au and Cu; and a trimetallic alloy of Pd, Au and Cu. It is preferred that the metal is selected from the group consisting of palladium (Pd), a mixture of Pd and Au, and a bimetallic alloy of Pd and Au. More preferably, the metal is palladium (Pd). Preferably, the Pt-alloying metal does not comprise platinum (e.g. when new or unused), though in some embodiments, the Pt-alloying metal may comprise a mixture of Pt and Pd in a fourth Pt:Pd ratio of less than 0.25:1.

It is preferred that the particles of the Pt-alloying metal have a mean particle size ≤20 nm, more preferably ≤10 nm, especially ≤8 nm. The particles of the Pt-alloying metal particles may have a dispersion of ≥10%, preferably ≥15%, such as ≥20%. The measurement of the dispersion refers to unused Pt-alloying metal particles (i.e. fresh particles, which have not been subjected to repeated or prolonged use).

The "mean particle size" and the "dispersion" as used herein with reference to the Pt-alloying metal, particularly when the Pt-alloying metal is palladium, can be determined by CO chemisorption, as follows. The Pt-alloying metal content can be measured by Inductively Coupled Plasma Optical Emission Spectroscopy (ICP-OES). The CO uptake of the sample can be measured using a Micromeritics Autochem 2920 instrument. The sample is pre-treated with hydrogen gas at 300°C. Carbon monoxide uptake is measured by pulse chemisorption at 50°C. The Pt-alloying metal particle size can then be calculated using the Autochem 2920 software based on the CO uptake and Strapping metal content for the sample. A chemisorption ratio for CO:Pd of 1:1 is used in the calculation.

The dispersion of the Pt-alloying metal is a measurement of the particle size of the Pt-alloying metal. Large particles with a low surface area have a low dispersion.

Generally, the capture material or capture region has a total loading of Pt-alloying metal (e.g. the metal content of the Pt-alloying metal of "W g/ft³") of from 5 g/ft³ to 25 g/ft³, more preferably from 8 g/ft³ to 15 g/ft³, such as about 10 g/ft³.

The total loading of platinum group metal in the oxidation catalyst article can be from 10 to 55 g/ft³, such as from 12 to 35 g/ft³. Generally, the washcoat loading of the first washcoat is preferably from 0.1 to 0.5 g/in³, more preferably from 0.2 to 0.4 g/in³. The washcoat loading of the second, third and/or fourth washcoats is preferably from 0.5 to 1.75 g/in³, more preferably 0.75 to 1.5 g/in³. The higher washcoat loadings can accommodate the pore former feature to improve the porosity of the second washcoat, which Applicant has found improves exotherm quench temperature and hydrocarbon slip.

Applicant has found that exotherm quench temperature can also be improved by the addition of particulate cellulose pore former to the second washcoat slurry before it is coated onto the substrate. The pore former is then removed during calcination, leaving behind a more open pore structure and, consequently, porosity. Preferably the resulting second washcoat has a greater porosity than the third (and fourth) washcoats, preferably wherein the pore volume per unit volume of the second washcoat is at least 10% greater than pore volume per unit volume of the third washcoat, preferably at least 20%. The third washcoat is generally intended to be a conventional washcoat, whereas the second washcoat is intentionally made more porous to increase access for the exhaust gases through to the underlying first washcoat. Pore volume may be measured by a variety of techniques, including inspection of micrographs (as shown in the figures annexed hereto) and the technique of FIB-SEM (Focused Ion Beam-Scanning Electron Microscopy (see e.g. EP 3263214 A1).

Preferably the second washcoat comprises barium. The barium helps to boost the performance of the PGMs in the second washcoat. In some embodiments, the first washcoat also comprises barium. Where the first, second or third washcoat contains barium, the barium loading of washcoats comprising barium may be from 20 to 150 g/ft³, preferably 50 to 125 g/ft³. It is preferred that barium may be present in any washcoat containing a combination of Pt and Pd, and not in any washcoat containing only Pt or only Pd. It is preferred that the fourth washcoat does not contain barium.

According to another aspect there is provided an exhaust gas treatment system comprising the oxidation catalyst article as described herein, wherein the inlet end of the substrate is oriented to the upstream side.

Preferably the oxidation catalyst article is upstream of a catalysed soot filter (CSF) and/or a Selective catalytic reduction catalyst (SCR), preferably wherein the oxidation catalyst article is upstream of a CSF which is itself upstream of an SCR. These components benefit from the provision of NO₂ generation on the DOC upstream as discussed above. The form and nature of a CSF and an SCR are well known in the art.

According to another aspect there is an apparatus comprising a compression ignition engine (e.g. a diesel engine) and the exhaust gas treatment system as described herein, wherein the oxidation catalyst article is arranged in use to be the first catalyst article contacted by exhaust gases leaving the diesel engine. As will be appreciated, phosphorus-poisoning is a particular issue right next to the engine due to phosphorus in the lubricant oil as described hereinabove. Consequently, the benefits of the invention are best seen in this configuration where the risks of phosphorus-poisoning are most pronounced. More particularly, with the inlet end oriented to the upstream side, the exhaust gas passes through the oxidation catalyst article entering from the inlet end and exiting from the outlet end.

According to a further aspect there is provided a method for the manufacture of the oxidation catalyst article as described herein, the method comprising:
1) providing a flow-through substrate;
2) providing first, second and third washcoat suspensions each comprising an alumina support, and a fourth washcoat suspension preferably comprising an alumina support;
3) washcoating the washcoat suspensions onto the substrate; and
4) calcining the coated substrate;
wherein the pre-calcined second washcoat comprises an organic pore-former which is decomposed in the calcination step, wherein the organic pore-former provides at least 10wt%, preferably 20 to 45wt%, relative to the weight of the alumina support in the second washcoat suspension. Applicant has found that if the quantity of pore former added is too high, the resulting washcoat can be susceptible to undesirable cracking.

It is well known that when preparing a washcoat it is possible to include further ingredients which are conventional in forming washcoat slurries. These include one or more of a binder and a thickening agent. Binders may include, for example, an oxide material with small particle size to bind the individual insoluble particles together in washcoat slurry. The use of binders in washcoats is well known in the art. Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include galactomannan gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and hydroxyethyl cellulose.

However, what is unusual in some embodiments of the method for the manufacture of the oxidation catalyst article is the significant levels of the particulate organic pore-former which can be present. The organic pore-former provides at least 10wt%, preferably 20 to 50wt%, relative to the weight of the alumina support in the second washcoat suspension.

It should be appreciated that the amount by weight of the pre-calcined second washcoat substantially excludes the supporting solvent of the washcoat.

Methods of washcoating are well known in the art. The method typically involves a step of applying the washcoat slurry to at least a portion of the substrate to form a washcoated substrate. Disposing the slurry on a substrate may be carried out using techniques known in the art. Typically, the slurry may be poured into the inlet of the substrate using a specific moulding tool in a predetermined amount, thereby disposing the loaded support material on the substrate. Subsequent vacuum and/or air knife and/or and drying steps may be employed during the disposition step. When the support is a filter block, the loaded support material may be disposed on the filter walls, within the filter walls (if porous) or both. A preferred coating method is disclosed in Applicant's WO1999/047260A1.

As will be appreciated, the first washcoat will be the washcoat that is coated first from the inlet end of the substrate, and the third washcoat will be the washcoat that is coated first from the outlet end of the substrate. The first and third washcoats may be coated onto the substrate in either order, as may be the order in which the second and fourth washcoats are coated onto the substrate (provided that the first precedes the second, and the third precedes the fourth). For example, the first and second washcoats may be coated from the inlet end before the third is coated from the outlet end, or alternatively, the first and third may be coated from each end of the substrate before the second washcoat is coated from the inlet end, or the fourth is coated from the outlet end.

The method further comprises calcining the washcoated substrate to form a diesel oxidation catalyst (DOC) article. This may desirably be formed multiple times between each washcoat layer application and formation step. The term "calcine", or "calcination", means heating the material in air or oxygen. This definition is consistent with the IUPAC definition of calcination. (lUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi: 10.1351/goldbook). The temperatures used in calcination depend upon the components in the material to be calcined and generally are between about 400°C to about 900°C for approximately 1 to 8 hours. In some cases, calcination can be performed up to a temperature of about 1200°C. In applications involving the processes described herein, calcinations are generally performed at temperatures from about 400°C to about 700°C for approximately 1 to 8 hours, preferably at temperatures from about 400°C to about 650°C for approximately 1 to 4 hours. The calcining step in air serves to burn out the organic pore-former and this leaves the voids in the remaining washcoat layer.

Calcining is typically carried out in an oven or furnace, more typically a belt or static oven or furnace, typically in hot air at a specific flow from one direction. The calcining may also comprise an initial drying step. The drying and calcination steps may be continuous or sequential. For example, a separate washcoat may be applied after the substrate is already washcoated and dried with a previous washcoat. A washcoated substrate can also be dried and calcined using one continuous heating program if coating is completed. As a result of the heating (calcination), the substrate is typically substantially free of organic compounds, more typically completely free of organic compounds.

Following the heating step, the substrate is typically cooled, more typically to room temperature. The cooling is typically carried out in air with or without cooling agent/media, typically without cooling agent.

### Figures

The present invention will now be described further with reference to the following non-limiting Figures, in which:

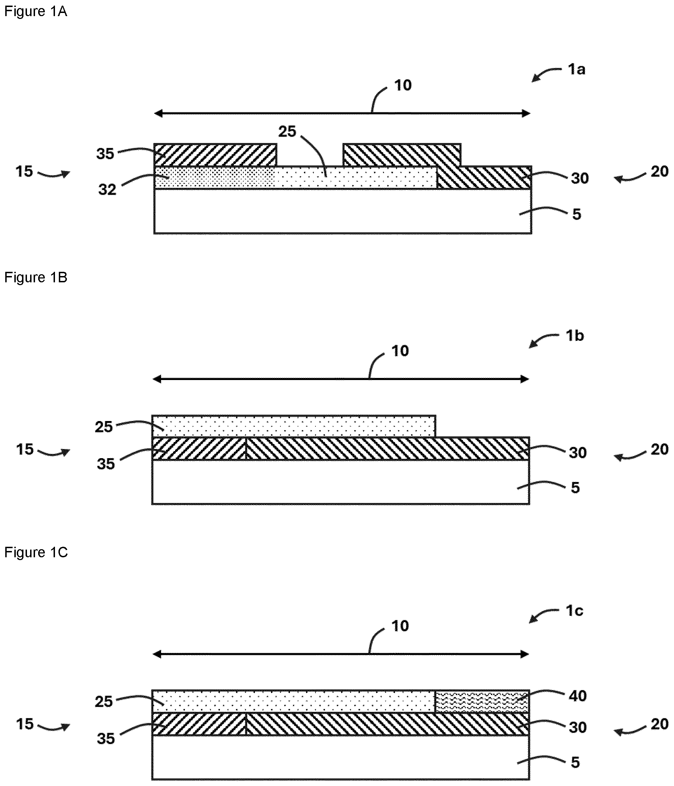

Figure 1A shows a prior art configuration of a DOC, similar to Example 6.4 in Applicant's WO2020260669A1;
Figure 1B shows a prior art configuration of a DOC;
Figure 1C shows a configuration of a DOC according to the present disclosure further comprising a platinum capture region; and

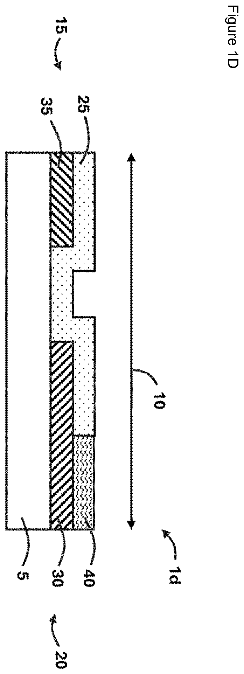

Figure 1D shows an alternative configuration of the DOC of Figure 1C according to the present disclosure.

Figure 1A shows a schematic in cross-section along a prior art oxidation catalyst article 1a, similar to Applicant's Example 6.4 in WO2020260669A1. The oxidation catalyst article 1a comprises a honeycomb flow-through substrate 5. The substrate 5 has walls of channels on which different catalyst zones are formed. The substrate 5 has a longitudinal length 10 extending from an inlet end 15 to an outlet end 20 of the substrate 5.

The oxidation catalyst article 1a in Figure 1A is a comparative prior art configuration. This is provided with a first washcoat 25 extending from the inlet end 15 and directly on the substrate. The first washcoat 25 comprises Pt and Pd in a 2:1 ratio supported on a particulate alumina support, such as alumina doped with 5 wt% silica. The first washcoat 25 extends about 75% of the longitudinal length 10.

There is provided a second washcoat 30 extending from the outlet end 20 of the substrate 5. This second washcoat extends about 50% of the longitudinal length 10. The second washcoat 30 comprises Pt as the only PGM and is supported on a particulate alumina support, such as alumina doped with 5 wt% silica. The second washcoat 30 overlies the first washcoat 25 for about 25% of the longitudinal length 10.

The first washcoat 25 is impregnated with a PGM-rich aqueous solution of platinum and palladium salts (i.e. no support material) applied from the inlet end 15 of the substrate, so that the alumina support of the first washcoat also supports the additional PGM-rich impregnation. The first washcoat 25 is impregnated to a depth of 35% of the longitudinal length 10. The zone of impregnation is shown in Figure 1A by the area of shading 32.

A third washcoat 35 comprising a particulate alumina support, such as alumina doped with 5 wt% silica, is applied from the inlet end 15 of the substrate to a depth of 35% of the longitudinal length 10 so that it overlies the impregnated zone 32.

In use the high PGM loading of the impregnated zone 32 gives excellent exotherm generation at relatively low inlet exhaust gas temperatures, i.e. the lowest temperature before exotherm generation fails, also known as exotherm extinction or "quench". The presence of the third washcoat 35 does increase the inlet exhaust gas temperature at which exotherm generation fails vs. an equivalent catalyst without the third washcoat 35, caused by mass transfer limitations preventing hydrocarbon fuel accessing the PGM-rich impregnated zone. However, the third washcoat 35 does protect the PGM-rich impregnated zone 32 from phosphorus poisoning, i.e. an equivalent catalyst without the third washcoat 35 has a higher exotherm generation fail inlet temperature than the catalyst having the third washcoat 35.

Figure 1B shows a schematic in cross-section along an oxidation catalyst article 1b. The oxidation catalyst article 1b comprises a flow-through substrate 5. The substrate 5 has walls of channels on which different catalyst zones are formed. The substrate 5 has a longitudinal length 10 extending from an inlet end 15 to an outlet end 20 of the substrate 5.

The oxidation catalyst article 1b is provided with a first washcoat 35 is applied from the inlet end 15 of the substrate (generally 25 to 35% of the longitudinal length 10). This is PGM rich and contains a particulate alumina support, such as alumina doped with 5 wt% silica.

A second washcoat 25 is provided extending from the inlet end 15 and directly on the first washcoat 35 and a third washcoat 30. The second washcoat 25 fully covers the first washcoat 35. The second washcoat 25 comprises Pt and Pt in a 2:1 ratio supported on an alumina support. The second washcoat 25 extends about 75% of the longitudinal length 10. The second washcoat 25 is formed with about 40wt% of an organic pore former (not shown) by weight of the pre-calcined washcoat, such that the second washcoat 25 will become highly porous after calcination.

The third washcoat 30 of catalyst article 1b extends about 75% of the longitudinal length 10 from the outlet end 20 of the substrate 5. The third washcoat 30 comprises Pt as the only PGM and is supported on alumina. The total length of the first washcoat 35 and the third washcoat 30 is about 100% of the longitudinal length 10.

In use the high PGM loading of the first washcoat 35 gives excellent exotherm performance. Since the PGM-content of the first washcoat 35 is covered by the second washcoat 25, the inventors have found that it is resistant to phosphorus-poisoning. In view of the high porosity of the second washcoat 25, the exhaust gases are better able to contact the PGM rich first washcoat 35 and the phosphorus-poisoning occurs primarily on the surface, more distant from the PGMs with the increased thickness of the second washcoat 25 (same material, higher porosity, leads to a greater thickness). This leads to further improvements in the fresh and aged performance of the article 1b formed in this way.

Figure 1C shows a schematic in cross-section along an oxidation catalyst article 1c which is in accordance with the invention described herein. The oxidation catalyst article 1c essentially comprises the oxidation catalyst article 1b described above, and further comprises a fourth washcoat 40 extending from the outlet end 20 and directly on the third washcoat 30. The total length of the second washcoat 25 and the fourth washcoat 40 is about 100% of the longitudinal length 10 such that the fourth washcoat extends about 25% of the longitudinal length 10 from the outlet end 20 of the substrate 5.

In use, as well as providing resistance to poisoning, the second washcoat 25 having a lower loading of PGM (and in particular platinum) than the high PGM loading of the first washcoat 35, provides the article 1c with reduced platinum volatility. Nevertheless, given the downstream problems associated with platinum volatility, the catalyst article 1c comprises a fourth washcoat 40 at the rear of the substrate 5 in which comprises a Pt-alloying metal which consists of palladium (for example, about 10 g/ft³ Pd), supported on a refractory metal oxide support, such as zirconia or alumina. As such, the configuration of article 1c provides leads to further improvements in the overall catalytic performance of an exhaust gas treatment system, particularly one comprising a downstream SCR and/or CSF for improved NOx conversion.

Figure 1D shows a schematic in cross-section along an alternative oxidation catalyst article 1d which is in accordance with the invention described herein. Article 1d differs from article 1c in Figure 1C in that the third washcoat 30 extends a shorter length of about 50% of the longitudinal length 10 from the outlet end 20. In view of the shorter length of the third washcoat 30, the second washcoat 25 still completely overlies the first washcoat 35 and overlaps a portion of the third washcoat 30, and is directly on the substrate between the first washcoat 35 and the third washcoat 30. The Pt loading of the third washcoat 30 in catalyst article 1d may be increased to provide a similar total PGM loading to catalyst article 1c - for example, the Pt loading of the third washcoat 30 in catalyst article 1d may be 50% greater than catalyst article 1c.

### Definitions

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of' (intended to mean that no other feature may be included such that if the components were expressed as percentages by their proportions, these would add up to 100%, whilst accounting for any unavoidable impurities), unless the context clearly dictates otherwise.

It will be understood that, although the terms "first", "second", etc. may be used herein to describe, for example, various elements, layers and/or portions, the elements, layers and/or portions should not be limited by these terms. These terms are only used to distinguish one element, layer or portion from another, or a further, element, layer or portion. It will be understood that the term "on" is intended to mean "directly on" such that there are no intervening layers between one material being said to be "on" another material. Spatially relative terms, such as "under", "below", "beneath", "lower", "over", "above", "upper" and the like, may be used herein for ease of description to describe one element or feature's relationship to another element(s) or feature(s). It will be understood that the spatially relative terms are intended to encompass different orientations of the catalyst in use or operation in addition to any orientation which may be depicted in the figures.

Numerical lower and upper limits of features described herein may preferably be combined to provide a closed range.

The foregoing detailed description has been provided by way of explanation and illustration and is not intended to limit the scope of the appended claims. Many variations of the presently preferred embodiments illustrated herein will be apparent to one of ordinary skill in the art and remain within the scope of the appended claims and their equivalents.

For the avoidance of doubt, the entire contents of all documents acknowledged herein are incorporated herein by reference.

## Claims

1. An oxidation catalyst article for treating an exhaust gas produced by a compression ignition engine comprising:
a flow-through honeycomb substrate having an inlet end and an outlet end and a longitudinal length extending therebetween and comprising an array of channels each defined by a channel wall;
a first washcoat extending a first length from the inlet end which is up to 40% of the longitudinal length of the substrate and comprising a first platinum group metal composition on a first alumina support, the first washcoat having a total combined loading of Pt and Pd of X g/ft³;
a second washcoat extending a second length from the inlet end which is up to 85% of the longitudinal length of the substrate and entirely overlying the first washcoat, the second washcoat comprising a second platinum group metal composition on a second alumina support, the second washcoat having a total combined loading of Pt and Pd of Y g/ft³;
a third washcoat extending a third length from the outlet end and comprising a third platinum group metal composition on a third alumina support, the third washcoat having a total combined loading of Pt and Pd of Z g/ft³, wherein the third platinum group metal composition is platinum only or both platinum and palladium; and
a fourth washcoat extending a fourth length from the outlet end which is 40% or less of the longitudinal length of the substrate, overlying the third washcoat and comprising a capture material, wherein the capture material comprises a Pt-alloying metal supported on a refractory oxide;
wherein 2Z<X>1.5Y;
wherein a sum of the first length and the third length is less than 120% of the longitudinal length; and
wherein a sum of the second length and the fourth length is from 100% to 120% of the longitudinal length.

2. The oxidation catalyst article according to claim 1, wherein the first platinum group metal composition comprises Pt and Pd in a first Pt:Pd weight ratio of from 1:1 to 6:1, preferably 3:1 to 5:1.

3. The oxidation catalyst article according to claim 1 or claim 2, wherein the second platinum group metal composition comprises Pt and Pd in a second Pt:Pd weight ratio of 1:2 to 6:1, preferably 1:1 to 3:1.

4. The oxidation catalyst article according to any preceding claim, wherein the third platinum group metal composition comprises Pt and Pd in a third Pt:Pd weight ratio of greater than 5:1, preferably wherein the third platinum group metal composition is platinum only (1:0).

5. The oxidation catalyst article according to any preceding claim, wherein the fourth washcoat comprises one or more of Au, Cu, Pd, and/or a mixture of Pt and Pd in a fourth Pt:Pd ratio of less than 0.25:1, as the Pt-alloying metal, preferably wherein the Pt-alloying metal consists of Pd (0:1).

6. The oxidation catalyst article according to claim 5, wherein a concentration of Pd in the fourth washcoat is greater than a concentration of Pd in the second washcoat.

7. The oxidation catalyst article according to any preceding claim, wherein the refractory oxide of the fourth washcoat comprises alumina and/or zirconia.

8. The oxidation catalyst article according to any preceding claim, wherein the fourth length is at least 15%, preferably 20 to 30%, of the longitudinal length of the substrate.

9. The oxidation catalyst article according to any preceding claim, wherein 2Z<X>2Y.

10. The oxidation catalyst article according to any preceding claim, wherein:
(i) 10Y>X>4Y and/or
(ii) 20Z>X>4Z and/or
(iii) Y≥Z and preferably Y>Z.

11. An exhaust gas treatment system comprising the oxidation catalyst article according to any one of the preceding claims, wherein the inlet end of the substrate is oriented to the upstream side.

12. The exhaust gas treatment system according to claim 11, wherein the oxidation catalyst article is upstream of a CSF and/or an SCR and/or an SCR coated filter.

13. A method for the treatment of an exhaust gas produced by a compression ignition engine, the method comprising passing the exhaust gas through the oxidation catalyst article according to any of claims 1 to 10 from the inlet end to the outlet end.
